(19) Europäisches Patentamt
European Patent Office
Office européen des brevets

(11) **EP 3 663 342 B1**

(12) **EUROPEAN PATENT SPECIFICATION**

(45) Date of publication and mention
of the grant of the patent:
**08.03.2023 Bulletin 2023/10**

(21) Application number: **18842167.1**

(22) Date of filing: **01.08.2018**

(51) International Patent Classification (IPC):
*C08J 9/18* (2006.01)   *C08J 9/232* (2006.01)
*C08F 290/06* (2006.01)   *C08F 290/14* (2006.01)

(52) Cooperative Patent Classification (CPC):
(C-Sets available)
**C08J 9/18; C08F 290/068; C08F 290/148;
C08J 9/232;** C08J 2201/034; C08J 2325/08 (Cont.)

(86) International application number:
**PCT/JP2018/028881**

(87) International publication number:
**WO 2019/026966 (07.02.2019 Gazette 2019/06)**

(54) **FOAMABLE POLYSTYRENE RESIN PARTICLES, POLYSTYRENE PREFOAMED PARTICLES, FOAM-MOLDED ARTICLE, AND METHODS FOR PRODUCING THESE**

SCHÄUMBARE POLYSTYROLHARZPARTIKEL, VORGESCHÄUMTE POLYSTYROLPARTIKEL, SCHAUMFORMARTIKEL UND VERFAHREN ZUR HERSTELLUNG DAVON

PARTICULES DE RÉSINE POLYSTYRÈNE EXPANSIBLES, PARTICULES DE POLYSTYRÈNE PRÉ-EXPANSÉES, ARTICLE MOULÉ EN MOUSSE, ET LEURS PROCÉDÉS DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.08.2017 JP 2017151473
26.09.2017 JP 2017185350**

(43) Date of publication of application:
**10.06.2020 Bulletin 2020/24**

(73) Proprietor: **Kaneka Corporation
Osaka-shi, Osaka 530-8288 (JP)**

(72) Inventors:
• **TAMURA, Mitsuhiro
Takasago-shi
Hyogo 676-8688 (JP)**
• **OHARA, Yoichi
Takasago-shi
Hyogo 676-8688 (JP)**

(74) Representative: **Vossius & Partner
Patentanwälte Rechtsanwälte mbB
Siebertstrasse 3
81675 München (DE)**

(56) References cited:
WO-A1-2006/106653   JP-A- S5 751 729
JP-A- 2008 260 795   JP-A- 2012 167 148
JP-A- 2016 183 255   JP-A- 2016 183 255
JP-A- 2018 145 285   JP-B1- S47 013 059
JP-B2- H0 554 854

(52) Cooperative Patent Classification (CPC): (Cont.)

C-Sets
**C08F 290/068, C08F 212/08;**
**C08F 290/148, C08F 212/08**

**Description**

Technical Field

The present invention relates to (i) expandable polystyrene-based resin particles produced from the copolymerization of a styrene-based monomer and a polysiloxane-containing macro monomer, (ii) pre-expanded polystyrene-based particles, (iii) a foamed molded product, and (iv) methods for producing (i) the expandable polystyrene-based resin particles, (ii) the pre-expanded polystyrene-based particles, and (iii) the foamed molded product, respectively.

Background Art

A polystyrene-based foamed molded product is widely used for, for example, a container, a packing material, a construction and civil engineering member, an automobile member due to its lightweight property and cushioning performance.

Note, however, that foamed molded products composed of an expandable polystyrene-based resin cause the following problem. Specifically, in a case where such foamed molded products are rubbed together or rubbed against, for example, another resin member or a steel plate, an annoying (squeaky) rubbing sound is easily produced. Particularly in the field of automobile members, vibrations are easily caused by, for example, traveling over a bad road. Thus, production of a rubbing sound causes a worse feeling of use of a polystyrene-based foamed molded product.

A foamed molded product that is obtained by (i) coating surfaces of styrene-based resin particles with an aliphatic compound or a silicone-based compound or (ii) kneading an aliphatic compound or a silicone-based compound with styrene-based resin particles is disclosed so that the above problems are solved. Note, however, that a method for coating surfaces of styrene-based resin particles with an aliphatic compound or a silicone-based compound has a problem such that (i) an added coating composition is desorbed from molded products that are being rubbed together and the molded products deteriorate in performance over time or (ii) desorption of the added coating composition from the styrene-based resin particles during molding of the styrene-based resin particles contaminates a molding mold. In contrast, according to a method for kneading an aliphatic compound or a silicone-based compound with styrene-based resin particles, the aliphatic compound or the silicone-based compound is present on surfaces of the styrene-based resin particles at a low ratio, and thus a large amount of an additive needs to be used. This tends to cause a deterioration in, for example, strength of a foamed molded product.

Note here that a method for copolymerizing a silicone-based compound with surfaces of resin particles is disclosed as a method for preventing or reducing production of a rubbing sound without using an additive. For example, Patent Literature 1 discloses a method for preventing or reducing production of a rubbing sound by expandable polystyrene-based resin particles that (i) contain a copolymer of a polysiloxane-containing monomer and a styrene-based monomer and (ii) have surfaces on which polysiloxane is present. Examples of a method for reducing a coefficient of static friction without using an additive include (i) a method, disclosed in Patent Literature 2, for reducing a coefficient of static friction by a foamed molded product containing (a) a polystyrene-based resin as a basic resin and (b) a polyacrylic acid alkyl ester-based resin and (ii) a method, disclosed in Patent Literature 3, for reducing a coefficient of static friction by composite resin particles containing a plant-derived polyethylene-based resin and a resin obtained by polymerizing a vinyl aromatic monomer.

Meanwhile, Patent Literatures 4 and 5 each provide an example of a method of copolymerizing a macro monomer with a styrene-based monomer.

Citation List

[Patent Literatures]

[Patent Literature 1]
Japanese Patent Application Publication Tokukai No. 2016-183255
[Patent Literature 2]
Japanese Patent Application Publication Tokukai No. 2014-193950
[Patent Literature 3]
Japanese Patent Application Publication Tokukai No. 2013-006966
[Patent Literature 4]
Japanese Patent Application Publication Tokukai No. 2008-231175
[Patent Literature 5]

International Publication No. WO2006/106653

## Summary of Invention

Technical Problem

Note, however, that the techniques disclosed in Patent Literatures 1 to 5 are susceptible to improvement in an object to obtain expandable polystyrene-based resin particles that are suitable to obtain, without the need to apply a coating composition in a large amount and while reducing contamination of a pre-expanding machine and/or a molding mold, a foamed molded product that makes it possible to eliminate or reduce a rubbing sound.

In view of the circumstances, the present invention has an object to provide (i) expandable polystyrene-based resin particles from which a foamed molded product is obtained that makes it possible to eliminate or reduce a rubbing sound without the need to apply a coating composition in a large amount and while contamination of a pre-expanding machine and/or a molding mold is reduced and (ii) a method for producing the expandable polystyrene-based resin particles.

Solution to Problem

As a result of diligent study, the inventors of the present invention acquired new knowledge of efficient reaction between a styrene-based monomer and a polysiloxane-containing macro monomer, and finally accomplished the present invention. Specifically, the present invention is as set out in the claims.

[1] An aspect of the present invention relates to a method for producing expandable polystyrene-based resin particles, the method including the steps of: a) producing polystyrene-based resin particles from the copolymerization of a styrene-based monomer and a polysiloxane-containing macro monomer, wherein an initiator, which is capable of generating an alkoxy radical and/or a carbonate radical, is added simultaneously with the addition of the polysiloxane-containing macro monomer, when a rate of conversion of the styrene-based monomer into a polymer is not less than 60% and not more than 99%, wherein the polysiloxane-containing macro monomer has a functional group which is copolymerizable with the styrene-based monomer; and b) producing the expandable polystyrene-based resin particles by impregnating an expanding agent into the polystyrene-based resin particles.

[2] An aspect of the present invention relates to expandable polystyrene-based resin particles containing a polymer comprising units of a styrene-based monomer; and units of a polysiloxane-containing macro monomer, wherein the polysiloxane-containing macro monomer has a functional group which is copolymerizable with the styrene-based monomer, and having a coefficient of static friction of surfaces of foamed molded products, obtained by pre-expanding the expandable polystyrene-based resin particles and molding the pre-expanded polystyrene-based resin particles of not more than 2.8, and a sound pressure of a sound, having a frequency of not less than 5,000 Hz and not more than 20,000 Hz and produced while the foamed molded products are being rubbed together, being not more than 10 dB.

Advantageous Effects of Invention

The present invention provides (i) expandable polystyrene-based resin particles from which a foamed molded product that makes it possible to eliminate or reduce a rubbing sound is obtained without the need to apply a coating composition in a large amount and while contamination of a pre-expanding machine and/or a molding mold is reduced and (ii) a method for producing the expandable polystyrene-based resin particles.

Description of Embodiments

The following description will discuss an embodiment of the present invention. Note, however, that the present invention is not limited to such an embodiment. The present invention is not limited to any configurations described below, but can be altered in many ways within the scope of the claims. Any numerical range expressed as "A to B" herein means "not less than A (A or more) and not more than B (B or less)" unless otherwise specified.

As a result of diligent study, the inventors of the present invention found that Patent Literatures 1 to 5 (described earlier) have the following problems. Specifically, according to the methods disclosed in Patent Literatures 2 and 3, a suitable resin to be copolymerized with a polyethylene-based resin or a polystyrene-based resin is limited. Furthermore, the methods disclosed in Patent Literatures 2 and 3 are less effective in eliminating or reducing a rubbing sound.

As the method disclosed in Patent Literature 1 and considered as a method for eliminating or reducing a rubbing sound, a method in which a coefficient of kinetic friction is low is known. Note, however, that the method disclosed in Patent Literature 1 and considered as a method for eliminating or reducing a rubbing sound causes a silicone-based compound to be less reactive and less copolymerizable with styrene-based resin particles. This causes a problem of (i) a reduction in protection power derived from a dispersing agent and (ii) a deterioration in product yield due to agglomeration of resin particles.

Note here that as a method for copolymerizing a macro monomer with a styrene-based monomer, a method for copolymerizing various macro monomers and polystyrene-based resin particles is known as in the methods disclosed in Patent Literatures 4 and 5. Note, however, that neither the method disclosed in Patent Literature 4 nor the method disclosed in Patent Literature 5 uses the macro monomer in expectation of a rubbing sound eliminating or reducing effect and discloses and suggests copolymerization of the styrene-based monomer with a polysiloxane-containing macro monomer. There are fewer examples of copolymerization of the styrene-based monomer with a polysiloxane-containing macro monomer. This is due to the following reason. Specifically, since the polysiloxane-containing macro monomer, which contains polysiloxane, is less cohesive, an unreacted polysiloxane-containing macro monomer makes a state of suspension during polymerization unstable. This makes it important to reduce an unreacted monomer by immediately reacting a polysiloxane-containing macro monomer. Note, however, that it has not been studied how to reduce an unreacted monomer by immediately reacting a polysiloxane-containing macro monomer.

As described earlier, the conventional techniques (i) are insufficient to obtain expandable polystyrene-based resin particles that are suitable to obtain, without the need to apply a coating composition in a large amount and while reducing contamination of a pre-expanding machine and/or a molding mold, a foamed molded product that makes it possible to eliminate or reduce a rubbing sound and (ii) have problems that remain to be solved.

In order to solve such problems, the inventors of the present invention accomplished the present invention. The following description will discuss an embodiment of the present invention.

A method of an embodiment of the present invention for producing expandable polystyrene-based resin particles includes the steps of: a) producing polystyrene-based resin particles containing a styrene-based monomer and a polysiloxane-containing macro monomer; and b) producing expandable polystyrene-based resin particles by impregnating an expanding agent into the polystyrene-based resin particles, in the step a), an initiator being added simultaneously with addition of the polysiloxane-containing macro monomer, the initiator causing generation of an alkoxy radical and/or a carbonate radical as defined in claim 1. Foamed molded products obtained by molding the expandable polystyrene-based resin particles which are produced by the method of an embodiment of the present invention for producing expandable polystyrene-based resin particles, a coefficient of static friction of surfaces of the foamed molded products being not more than 2.8, and a sound pressure of a sound, having a frequency of not less than 5,000 Hz and not more than 20,000 Hz and produced while the foamed molded products are being rubbed together, being not more than 10 dB.

Examples of the styrene-based monomer used in an embodiment of the present invention include styrene-based derivatives such as styrene, $\alpha$-methylsthylene, paramethyl styrene, t-butyl styrene, and chlorstyrene. Each of these styrene-based monomers can be used alone. Alternatively, two or more of these styrene-based monomers can be mixed and used. In particular, styrene is preferable from the viewpoint of excellent expandability and excellent molding processability.

According to an embodiment of the present invention, a monomer that is copolymerizable with styrene can be added to a styrene-based monomer provided that such a monomer does not eliminate or reduce effects of the present invention. Examples of the monomer that is copolymerizable with styrene include acrylic and methacrylic esters such as methyl acrylate, butyl acrylate, methyl methacrylate, ethyl methacrylate, and cetyl methacrylate; monomers such as acrylonitrile, dimethyl fumarate, and ethyl fumarate; and bifunctional monomers such as divinylbenzene and alkylene glycol dimethacrylate. These monomers that are copolymerizable with styrene can be used in one kind or two or more kinds to be subjected to copolymerization.

According to an embodiment of the present invention, such a monomer(s) is/are added to the styrene-based monomer. Thus, a total amount of the styrene-based monomer and other monomer(s) that is/are copolymerizable with the styrene-based monomer is preferably not less than 89.0% by weight and not more than 99.5% by weight with respect to 100% by weight of a copolymer.

The polysiloxane-containing macro monomer has a functional group so as to be copolymerized with the styrene-based monomer. At least one molecule of the polysiloxane-containing macro monomer preferably has a plurality of functional groups in a side chain or at respective both terminals. A functional group equivalent of the functional groups is preferably not less than 100 g/mol and not more than 20,000 g/mol, and more preferably not less than 1,000 g/mol and not more than 10,000 g/mol. The functional group equivalent which is less than 100 g/mol causes an increase in polymerization of polysiloxane-containing macro monomers. This tends to make it difficult to obtain a copolymer of a polysiloxane-containing macro monomer and styrene. The functional group equivalent which is more than 20,000 g/mol causes the polysiloxane-containing macro monomer to be less reactive with the styrene-based monomer. This tends to make it difficult for the polysiloxane-containing macro monomer to be copolymerized with the styrene-based monomer.

A method for obtaining the polysiloxane-containing macro monomer is exemplified by, but not particularly limited to, a solution polymerization method, a suspension polymerization method, and an emulsion polymerization method.

A polysiloxane-containing macro monomer having a functional group at least in a side chain (hereinafter also referred to as a "side chain type polysiloxane-containing macro monomer") can be produced by, for example, a method of carrying out polymerization of cyclic, linear, or branched organosiloxane (preferably cyclic organosiloxane) with use of a catalyst such as an acid, an alkali, a salt, or a fluorine compound. The organosiloxane used in the above polymerization has a weight average molecular weight (Mw) in terms of polystyrene of preferably not more than 20,000, and more preferably not more than 10,000. The above method can be more preferably exemplified by a method of using not only the above organosiloxane but also silane having a functional group and/or cyclic, linear, or branched organosiloxane having a functional group.

The above method can alternatively be exemplified by a method of equilibrating, in a solution, a slurry, or an emulsion in the presence of, for example, a catalyst similar to that mentioned earlier, polysiloxane and preferably silane having a functional group and/or cyclic, linear, or branched organosiloxane having a functional group. The polysiloxane has a weight average molecular weight (Mw) in terms of polystyrene of preferably not less than 20,000, more preferably not less than 50,000, and even more preferably not less than 100,000.

A side chain type polysiloxane-containing macro monomer can be produced by, for example, a publicly known emulsion polymerization method described in Japanese Patent Application Publication Tokukai No. 2006-291122.

Specifically, a polysiloxane-containing macro monomer can be obtained with use of cyclic siloxane typified by 1,3,5,7-octamethylcyclotetrasiloxane and/or a functional group(s) such as (i) hydrolyzable group-containing bifunctional silane (e.g., dimethyldimethoxysilane), (ii) if necessary, 3 or more-functional alkoxysilane (e.g., methyltriethoxysilane or tetrapropyl oxysilane) and a condensate of 3 or more-functional silane (e.g., methyl orthosilicate), and (iii) if necessary, mercaptopropyl dimethoxymethylsilane, acryloyloxypropyl dimethoxymethylsilane, methacryloyloxy propyl dimethoxymethylsilane, vinyldimethoxymethylsilane, and vinylphenyl dimethoxymethylsilane. Of the above silanes, methacryloyloxy propyl dimethoxymethylsilane is preferable from the viewpoint of copolymerization with the styrene-based monomer.

The polysiloxane-containing macro monomer has a viscosity (kinematic viscosity) at 25°C of preferably not less than 10 mm$^2$/s, and more preferably not less than 50 mm$^2$/s. The polysiloxane-containing macro monomer which has a higher viscosity has a longer siloxane chain. This makes it easier to bring about a rubbing sound eliminating or reducing effect.

Polysiloxane, which is a main chain of the polysiloxane-containing macro monomer, has a weight average molecular weight in terms of polystyrene, found with use of GPC, of preferably not less than 1,000 and not more than 500,000, and more preferably not less than 3,000 and not more than 300,000. The polysiloxane which has a greater molecular weight has a longer siloxane chain. This makes it easier to bring about a rubbing sound eliminating or reducing effect. However, the polysiloxane-containing macro monomer which has a too high viscosity is less handleable and consequently difficult to polymerize.

A functional group of the polysiloxane-containing macro monomer used in an embodiment of the present invention is not limited to any particular functional group provided that the functional group reacts with the styrene-based monomer. A vinyl group is preferable due to its reactivity with the styrene-based monomer. Of functional groups including a vinyl group, a methacryloyl group or an acryloyl group is more preferable due to its reactivity with the styrene-based monomer.

Examples of the main chain of the polysiloxane-containing macro monomer include polyorganosiloxanes such as polydimethylsiloxane, polymethylphenylsiloxane, and a polydimethylsiloxane-diphenylsiloxane copolymer; and polyorganohydrogen siloxanes in which side chain alkyl groups are partially replaced with hydrogen atoms. Of the above main chains, polydimethylsiloxane, polymethylphenylsiloxane, or a polydimethylsiloxane-diphenylsiloxane copolymer is more preferable. Furthermore, economically, polydimethylsiloxane, which is easily available, is the most preferable.

The polysiloxane-containing macro monomer has preferably not less than 1.5 functional groups, and more preferably not less than 1.7 functional groups. The polysiloxane-containing macro monomer which has less than 1.5 functional groups is less reactive with the styrene-based monomer. Thus, such a polysiloxane-containing macro monomer tends to be less easily copolymerized with the styrene-based monomer. The polysiloxane-containing macro monomer has not more than 50.0 functional groups, preferably not more than 30.0 functional groups, and more preferably not more than 10.0 functional groups. The polysiloxane-containing macro monomer which has more than 50.0 functional groups causes polysiloxane-containing macro monomers to react with each other. This causes such a polysiloxane-containing macro monomer to be less reactive with the styrene-based monomer.

A base material resin constituting the expandable polystyrene-based resin particles of an embodiment of the present invention preferably contains the styrene-based monomer in an amount of not less than 89.0% by weight and not more than 99.5% by weight and the polysiloxane-containing macro monomer in an amount of not less than 0.5% by weight and not more than 11.0% by weight, with respect to 100% by weight of a copolymer (note that "100% by weight of a copolymer" is synonymous with "a total amount of the styrene-based monomer and the polysiloxane-containing macro monomer is 100% by weight"), and more preferably contains the styrene-based monomer in an amount of not less than 89.8% by weight and not more than 99.2% by weight and the polysiloxane-containing macro monomer in an amount of not less than 0.8% by weight and not more than 10.2% by weight, with respect to 100% by weight of the copolymer. The polysiloxane-containing macro monomer which is contained in a larger amount causes an expanding agent to easily escape. Thus, expandable polystyrene-based resin particles tend to be less expandable and less moldable. This makes it difficult to obtain a foamed molded product that has a beautiful surface. The polysiloxane-containing macro monomer which is contained in a smaller amount is insufficient to bring about a rubbing sound eliminating or reducing effect. Alternatively, for example, the styrene-based monomer can be contained in an amount of not less than 96.7% by weight and not more than 98.8% by weight, and the polysiloxane-containing macro monomer can be contained in an amount of not less than 1.2% by weight and not more than 3.3% by weight. Further alternatively, the styrene-based monomer can be contained in an amount of not less than 97.5% by weight and not more than 98.5% by weight, and the polysiloxane-containing macro monomer can be contained in an amount of not less than 1.5% by weight and not more than 2.5% by weight.

According to the present invention, a radical generating initiator, together with the polysiloxane-containing macro monomer, is added when a rate of conversion of the styrene-based monomer into a polymer is not less than 60% and not more than 99%. The radical generating initiator is preferably a peroxide-based and/or azo compound-based initiator, more preferably a peroxide-based initiator, and is such as to generate an alkoxy radical and/or a carbonate radical.

Typical examples of the peroxide-based and/or azo compound-based initiator include organic peroxides such as t-butylperoxy benzoate, isopropyl-t-butylperoxy carbonate, butyl perbenzoate, t-butylperoxy-2-ethylhexanoate, t-butyl perpivalate, t-butylperoxy isopropylcarbonate, di-t-butylperoxy hexahydroterephthalate, 1,1-di(t-butylperoxy)3,3,5-trimethylcyclohexane, 1,1-bis(t-amylperoxy)-3,3,5-trimethylcyclohexane, 1,1-di(t-butylperoxy)cyclohexane, and t-butylperoxy-2-ethylhexyl monocarbonate; and azo compounds such as azobisisobutyronitrile and azobisdimethylvaleronitrile. Of these peroxide-based and/or azo compound-based initiators, di-t-butylperoxy hexahydroterephthalate or t-butylperoxy-2-ethylhexyl monocarbonate is more preferable from the viewpoint of its properties that cause the styrene-based monomer and the polysiloxane-containing macro monomer to react with each other. Each of these polymerization initiators can be used alone. Alternatively, two or more of these polymerization initiators can be used in combination.

In the present invention, "a yield of expandable polystyrene-based resin particles" refers to a percentage of resin particles that can be used as expandable polystyrene-based resin particles and are obtained by removing, by classification, (i) several particles that have agglomerated and adhered to each other, (ii) scales and (iii) fine particles. Specifically, "a yield of expandable polystyrene-based resin particles" refers to a ratio of (a) resin particles having a predetermined particle size to (b) resin particles as a whole, the ratio being obtained in a case where all expandable polystyrene-based resin particles produced are classified with use of a sieve. The predetermined particle size is preferably not more than 1400 $\mu$m and not less than 600 $\mu$m. Expandable polystyrene-based resin particles that have a particle size of not more than 1400 $\mu$m and not less than 600 $\mu$m have a yield of preferably not less than 80 wt%, and more preferably not less than 90 wt%.

Resin particles that have a particle size of more than 1400 $\mu$m after classification are, for example, an agglomeration of a plurality of particles, flat particles, and/or scales. Such resin particles cause a problem of, for example, occurrence of clogging in a filling feeder during molding carried out after foaming. Occurrence of clogging in the filling feeder causes a deterioration in filling property. This may cause fusion and/or a deterioration in surface property and consequently cause a deterioration in rubbing sound eliminating or reducing effect.

Resin particles that have a particle size of less than 600 $\mu$m after classification are fine powders/fine particles into which scales have been broken. Mixing of such resin particles in a product causes a problem, occurring during molding, of clogging in a molding slit. Clogging in the mold slit causes a deterioration in passage of vapor through the mold slit. This may cause fusion and/or a deterioration in surface property and consequently cause a deterioration in rubbing sound eliminating or reducing effect.

Furthermore, there is a problem of a loss in productivity which loss occurs in a case where resin particles that have a particle size of not more than 1400 $\mu$m and not less than 600 $\mu$m have a yield of less than 80 wt%.

In an embodiment of the present invention, a coefficient of static friction refers to a measured value of a friction that is produced in a case where a load of 200 g is applied to each of (i) a foamed molded product surface and (ii) an iron plate. Note that the foamed molded product surface refers to a surface that has a skin layer but does not refer to a surface on which an inner part of a particle is exposed by cutting a molded product.

A foamed molded product that is obtained by an embodiment of the present invention has a coefficient of static friction of preferably not more than 2.8, and more preferably not more than 2.5. The coefficient of static friction which coefficient is more than 2.8 causes foamed molded products to be less smoothly rubbed together or rubbed against another substance. This tends to cause a rubbing sound to be less effectively eliminated or reduced.

A rubbing sound is considered to be produced because a stick-slip phenomenon that repeatedly occurs causes a foamed molded product to vibrate due to a friction produced. The stick-slip phenomenon is a phenomenon that occurs during a transition from a static friction to a kinetic friction. Thus, it is useful to eliminate or reduce a rubbing sound by a method of reducing a coefficient of static friction so as to achieve a smooth transition from a stick phenomenon to a slip phenomenon.

A sound pressure of a sound, having a frequency of not less than 5,000 Hz and not more than 20,000 Hz and produced while foamed molded products that are obtained by an embodiment of the present invention are being rubbed together, is preferably not more than 10 dB, and more preferably not more than 5 dB. A sound about which a human feels annoyed is said to be a high frequency sound in a range of not less than 5000 Hz. A sound in a range of more than 20,000 Hz is less audible to a human. A sound that has a sound pressure of more than 10 dB makes the sound loud. This tends to cause a human to easily feel annoyed about the sound.

The expandable polystyrene-based resin particles of an embodiment of the present invention each preferably have a surface layer part which contains polysiloxane as a main component.

The term "surface layer part" of an embodiment of the present invention refers to an area that is not less than 30 nm and not more than 250 nm below an outermost layer of an expandable polystyrene-based resin particle. The expression "which contains polysiloxane as a main component" means a state in which a polysiloxane component is contained in an amount of not less than 50% by weight, preferably not less than 70% by weight, and more preferably not less than 90% by weight, with respect to 100% by weight of the copolymer.

The polysiloxane component which is contained in an amount of less than 50% by weight tends to make it difficult to bring about a rubbing sound eliminating or reducing effect.

An amount of a gel component in the expandable polystyrene-based resin particles of an embodiment of the present invention, the gel component being insoluble in THF, is preferably not less than 5 wt% and not more than 45 wt%, and more preferably not less than 12 wt% and not more than 40 wt%. In a case where the amount of the gel component is less than 5 wt%, a rubbing sound eliminating or reducing effect is less sufficiently achieved. In a case where the amount of the gel component is more than 45 wt%, expandable polystyrene-based resin particles tend to be less expandable and moldable. This tends to make it difficult to obtain a foamed molded product that has a beautiful surface.

A component in the expandable polystyrene-based resin particles of an embodiment of the present invention, the component being soluble in THF, has a weight average molecular weight in terms of polystyrene, measured with use of GPC, of preferably not less than 200,000 and not more than 400,000, and more preferably not less than 250,000 and not more than 350,000. In a case where the component in the expandable polystyrene-based resin particles, the component being soluble in THF, has a light weight average molecular weight, a foamed molded product that is used as a member tends to deteriorate in mechanical strength (e.g., compressive strength). In a case where the component in the expandable polystyrene-based resin particles, the component being soluble in THF, has a great weight average molecular weight, it is difficult to obtain a molded product that has a good surface property. According to an embodiment of the present invention, in order to adjust a molecular weight, it is possible to use, as a monomer that is copolymerizable with styrene, a bifunctional monomer such as divinylbenzene or hexanediol di(meth)acrylate.

The expandable polystyrene-based resin particles of an embodiment of the present invention can be produced by, for example, (i) a method (hereinafter also referred to as "suspension polymerization") of polymerizing a styrene-based monomer in an aqueous suspension and subsequently polymerizing a resultant mixture by adding a polysiloxane-containing macro monomer to the mixture or (ii) a so-called seed polymerization method of (a) impregnating a styrene-based monomer and a polysiloxane-containing macro monomer into polystyrene-based resin particles by continuously or intermittently adding the styrene-based monomer and the polysiloxane-containing macro monomer to an aqueous suspension containing the polystyrene-based resin particles and (b) polymerizing a resultant mixture. Of the above methods, the seed polymerization method is more preferable because the seed polymerization method (i) makes it possible to obtain resin particles having a uniform particle size, (ii) makes it easy to obtain a core-shell structure, and (iii) achieves good dispersion stability.

The aqueous suspension refers to water or an aqueous solution in which polystyrene-based resin particles and a monomer liquid drop are dispersed. A surfactant and a monomer each of which is soluble in water can be dissolved in the aqueous suspension. A dispersing agent, an initiator, a chain transfer agent, a crosslinking agent, a cell adjusting agent, a flame retarder and a plasticizing agent, each of which is insoluble in water can alternatively be dispersed in the aqueous suspension.

A weight ratio between the expandable polystyrene-based resin particles and water is preferably in the range of 1.0/0.6 to 1.0/3.0 in terms of a ratio between resultant expandable polystyrene-based resin particles and water.

According to an embodiment of the present invention, it is preferable that suspension polymerization and seed polymerization be carried out by (i) carrying out main reactions thereof by carrying out first stage polymerization and then (ii) reducing a residual monomer by carrying out a second stage polymerization reaction at a temperature higher than the temperature at which the first stage polymerization is carried out.

A polymerization initiator that is used to carry out the first stage polymerization can be a radical generating polymerization initiator that is commonly used to produce a thermoplastic polymer. Typical examples of the polymerization initiator include organic peroxides such as benzoyl peroxide, lauroyl peroxide, t-butylperoxy benzoate, isopropyl-t-butylperoxy carbonate, butyl perbenzoate, t-butylperoxy-2-ethylhexanoate, t-butyl perpivalate, t-butylperoxy isopropylcarbonate, di-t-butylperoxy hexahydroterephthalate, 1,1-di(t-butylperoxy)3,3,5-trimethylcyclohexane, 1,1-bis(t-amylperoxy)-3,3,5-trimethylcyclohexane, 1,1-di(t-butylperoxy)cyclohexane, and t-butylperoxy-2-ethylhexyl monocarbonate; and azo compounds such as azobisisobutyronitrile and azobisdimethylvaleronitrile. Each of these polymerization initiators can be used alone. Alternatively, two or more of these polymerization initiators can be used in combination.

Examples of a dispersing agent that can be used to carry out the suspension polymerization and the seed polymerization include poorly water-soluble inorganic salts such as tricalcium phosphate, magnesium pyrophosphate, hydroxyapatite, and kaolin; and water-soluble polymers such as polyvinyl alcohol, methyl cellulose, polyacrylamide, and polyvinylpyrrolidone. In a case where a poorly water-soluble inorganic salt is used, it is effective to use, in combination, an anionic surfactant such as $\alpha$-olefin sodium sulfonate or dodecylbenzene sodium sulfonate. Such a dispersing agent can be added as appropriate during polymerization.

Though depending on a kind, the dispersing agent which is a poorly water-soluble inorganic salt is preferably used in an amount of not less than 0.1 parts by weight and not more than 3.0 parts by weight with respect to 100 parts by weight of water. In contrast, the dispersing agent which is an anionic surfactant or a water-soluble polymer is preferably used in an amount of not less than 30 ppm and not more than 500 ppm with respect to 100 parts by weight of water.

Examples of the expanding agent include volatile expanding agents such as (i) aliphatic hydrocarbons, each of which is a hydrocarbon having not less than 3 to 5 carbon atoms, such as propane, isobutane, normal butane, isopentane, normal pentane, and neopentane and (ii) hydrofluorocarbons, each of which has an ozone depletion potential of 0 (zero), such as difluoroethane and tetrafluoroethane. These expanding agents are allowed to be used in combination. The expanding agent is used in an amount of preferably not less than 4 parts by weight and not more than 10 parts by weight, and more preferably not less than 5 parts by weight and not more than 9 parts by weight, with respect to 100 parts by weight of the polystyrene-based resin particles. The expanding agent which is used in a small amount makes it difficult to obtain an expansion ratio. In contrast, the expanding agent which is used in a great amount easily causes agglomeration of resins during a step of impregnating the expanding agent into the polystyrene-based resin particles.

According to the present invention, the polysiloxane-containing macro monomer is added when a rate of conversion into the polystyrene-based resin particles through polymerization (hereinafter may also be referred to as a "polymerization conversion rate") is not less than 60% and not more than 99%, and preferably not less than 75% and not more than 95%. In a case where the polysiloxane-containing macro monomer is added when the polymerization conversion rate is less than 60%, abnormal polymerization tends to occur due to agglomeration of particles. In a case where the polysiloxane-containing macro monomer is added when the polymerization conversion rate is more than 99%, a polymerization reaction between the polystyrene-based resin particles and the polysiloxane-containing macro monomer tends not to progress, and thus agglomeration tends to occur.

According to an embodiment of the present invention, the polysiloxane-containing macro monomer is added at a rate of not less than 0.2% by weight/hr and not more than 10.0% by weight/hr, and more preferably not less than 0.4% by weight/hr and not more than 8.0% by weight/hr, with respect to 100% by weight of the copolymer. Addition of the polysiloxane-containing macro monomer at a rate of less than 0.2% by weight/hr reduces productivity and thus is unsuited for mass production. Addition of the polysiloxane-containing macro monomer at a rate of more than 10.0% by weight/hr tends to cause abnormal polymerization due to agglomeration of resin particles that are being polymerized.

Furthermore, when a rate of conversion of the styrene-based monomer into a polymer is not less than 60% and not more than 99%, the polysiloxane-containing macro monomer, together with the radical generating initiator, is preferably added, with respect to 100% by weight of the copolymer, in an amount of not less than 0.5% by weight and not more than 11.0% by weight at a rate of not less than 0.2% by weight/hr and not more than 10.0% by weight/hr.

As an additive(s) used in an embodiment of the present invention, a solvent, a plasticizing agent, a cell adjusting agent, a flame retarder, a coating composition, and/or the like can be used for any purpose.

The solvent can be a solvent having a boiling point of not lower than 50°C. Examples of such a solvent include aliphatic hydrocarbons each having 6 or more carbon atoms, such as toluene, hexane, and heptane; and alicyclic hydrocarbons each having 6 or more carbon atoms, such as cyclohexane and cyclooctane.

The plasticizing agent can be a high boiling point plasticizing agent having a boiling point of not lower than 200°C. Examples of such a high boiling point plasticizing agent include fatty acid glycerides such as triglyceride stearate, triglyceride palmitate, triglyceride laurate, diglyceride stearate, monoglyceride stearate; vegetable oils such as coconut oil, palm oil, and palm kernel oil; aliphatic esters such as dioctyl adipate and dibutyl sebacate; and organic hydrocarbons such as liquid paraffin and cyclohexane.

Examples of the cell adjusting agent include aliphatic bisamides such as methylenebisstearylamide and ethylenebisstearylamide; and polyethylene wax.

The flame retarder and an auxiliary flame retarder each used in an embodiment of the present invention can be a publicly known and commonly used flame retarder and a publicly known and commonly used auxiliary flame retarder, respectively.

Specific examples of the flame retarder include halogenated aliphatic hydrocarbon-based compounds such as hexabromocyclododecane, tetrabromobutane, and hexabromocyclohexane; brominated phenols such as tetrabromobisphenol A, tetrabromobisphenol F, and 2,4,6-tribromophenol; brominated phenol derivatives such as tetrabromobisphenol A-bis(2,3-dibromopropyl ether), tetrabromobisphenol A-bis(2,3-dibromo-2-methylpropyl ether), tetrabromobisphenol A-diglycidyl ether, and 2,2-bis[4'(2",3"-dibromoalkoxy)-3',5'-dibromophenyl]-propane; brominated butadiene-vinyl aromatic hydrocarbon copolymers such as a brominated styrene-butadiene block copolymer, a brominated random styrene-butadiene copolymer, and a brominated styrene-butadiene graft copolymer (e.g., EMERALD3000 manufactured by Chemtura Corporation and a compound disclosed in Published Japanese Translation of PCT International Application Tokuhyo No. 2009-516019). Each of these flame retarders can be used alone. Alternatively, two or more of these flame retarders can be mixed and used.

Specific examples of the auxiliary flame retarder include initiators such as cumene hydroperoxide, dicumyl peroxide, t-butylhydroperoxide, and 2,3-dimethyl-2,3-diphenylbutane.

Examples of the coating composition in accordance with an embodiment of the present invention include fatty acid triglycerides such as triglyceride laurate, triglyceride stearate, triglyceride linoleate, and triglyceride hydroxystearate; fatty acid diglycerides such as diglyceride laurate, diglyceride stearate, and diglyceride linoleate; fatty acid monoglycerides such as monoglyceride laurate, monoglyceride stearate, and monoglyceride linoleate; vegetable oils such as hardened castor oil; fatty acid metal salts such as zinc stearate, calcium stearate, magnesium stearate, aluminum stearate, zinc laurate, and calcium laurate; and nonionic surfactants such as polyoxyethylene cetyl ether, polyoxyethylene oleyl ether, polyoxyethylene stearyl ether, polyoxyethylene laurate, polyoxyethylene palmitate, polyoxyethylene stearate, and polyoxyethylene oleate. Each of these coating compositions can be used alone. Alternatively, two or more of these coating compositions can be mixed. Of the above coating compositions, triglyceride stearate and hardened castor oil, each of which promotes fusion of a foamed product, are preferable. Furthermore, such a coating composition can be added to an aqueous system during impregnation of the expanding agent into the polystyrene-based resin particles, or can be added after dehydration or after drying so that the expandable polystyrene-based resin particles are covered with the coating composition. It is not particularly limited how to cover the expandable polystyrene-based resin particles with the coating composition. The expandable polystyrene-based resin particles are preferably covered with the coating composition by adding the coating composition after drying and then mixing and stirring the expandable polystyrene-based resin particles and the coating composition. The expandable polystyrene-based resin particles are covered with the coating composition by, for example, (i) a method in which the expandable polystyrene-based resin particles and the coating composition are blended together by placing the expandable polystyrene-based resin particles and the coating composition in a bag and shaking the bag with a hand or (ii) a method in which the expandable polystyrene-based resin particles and the coating composition are blended together with use of a blending machine such as a ribbon mixer, Supermixer, Nauta mixer, or PAM Apexmixer.

The coating composition is added in an amount of preferably not less than 0.02 parts by weight and not more than 0.50 parts by weight, and more preferably not less than 0.03 parts by weight and not more than 0.20 parts by weight. The coating composition which is added in an amount of less than 0.02 parts by weight tends to make it impossible to bring about a fusion promoting effect. In contrast, the coating composition which is added in an amount of more than 0.50 parts by weight tends to cause a foamed molded product to have a less beautiful surface due to erosion of surfaces of the expandable polystyrene-based resin particles.

Resultant expandable polystyrene-based resin particles can be made into pre-expanded particles by a common pre-expansion method. Specifically, until a desired expansion ratio is achieved, expandable polystyrene-based resin particles are pre-expanded by (i) placing the expandable polystyrene-based resin particles in a container provided with a stirrer and then (ii) heating the expandable polystyrene-based resin particles with use of a heat source such as steam.

Furthermore, pre-expanded expandable polystyrene-based particles can be molded, by a common in-mold molding method, into a foamed molded product. Specifically, pre-expanded expandable polystyrene-based particles with which a mold that can be closed but cannot be sealed is filled are fused together by heating with use of steam, so that the pre-expanded expandable polystyrene-based particles are molded into a foamed molded product.

Evaluated were a rubbing sound and a coefficient of static friction of a foamed molded product of an embodiment of the present invention, the foamed molded product being obtained by (i) pre-expanding expandable polystyrene-based resin particles so that pre-expanded expandable polystyrene-based particles have an expansion ratio of 45 times and (ii) molding the pre-expanded expandable polystyrene-based particles. The foamed molded product of an embodiment of the present invention, a rubbing sound and a coefficient of static friction of which foamed molded product were measured, was produced under the following conditions.

<Conditions>

The expandable polystyrene-based resin particles to be classified with use of a sieve so as to have a predetermined particle size were pre-expanded, under a blowing vapor pressure of 0.09 MPa to 0.12 MPa, so as to have a volume magnification of 45 times. Then, resultant pre-expanded styrene-based particles were molded in a mold under a blowing vapor pressure of 0.07 MPa, so that a plate-like foamed molded product having a thickness of 25 mm, a length of 400 mm, and a width of 350 mm was obtained.

An embodiment of the present invention encompasses expandable polystyrene-based resin particles containing: a styrene-based monomer; and a polysiloxane-containing macro monomer, a coefficient of static friction of surfaces of foamed molded products, obtained by pre-expanding the expandable polystyrene-based resin particles and molding the expandable polystyrene-based resin particles pre-expanded, being not more than 2.8, and a sound pressure of a sound, having a frequency of not less than 5,000 Hz and not more than 20,000 Hz and produced while the foamed molded products are being rubbed together, being not more than 10 dB, the coefficient of static friction and the sound pressure each being measured for the foamed molded products produced under the following conditions.

<Conditions>

The expandable polystyrene-based resin particles to be classified with use of a sieve so as to have a predetermined particle size were pre-expanded, under a blowing vapor pressure of 0.09 MPa to 0.12 MPa, so as to have a volume magnification of 45 times. Then, resultant pre-expanded styrene-based particles were molded in a mold under a blowing vapor pressure of 0.07 MPa, so that a plate-like foamed molded product having a thickness of 25 mm, a length of 400 mm, and a width of 350 mm is obtained.

An embodiment of the present invention encompasses foamed molded products obtained by (i) pre-expanding expandable polystyrene-based resin particles containing a styrene-based monomer and a polysiloxane-containing macro monomer and (ii) molding the expandable polystyrene-based resin particles pre-expanded, a coefficient of static friction of surfaces of the foamed molded products being not more than 2.8, and a sound pressure of a sound, having a frequency of not less than 5,000 Hz and not more than 20,000 Hz and produced while the foamed molded products are being rubbed together, being not more than 10 dB.

A rubbing sound and a coefficient of static friction of a foamed molded product of an embodiment of the present invention are determined independent of a method for pre-expanding expandable polystyrene-based resin particles and a type of an in-mold molding method, but depending on a kind and a contained amount of a polysiloxane-containing macro monomer that is present on surfaces of the expandable polystyrene-based resin particles. The coefficient of static friction is a characteristic numerical value that each substance has. The coefficient of static friction for which coefficient a foamed molded product is measured depends on a substance that is present on a surface of the foamed molded product. Expandable polystyrene-based resin particles become a foamed molded product through a pre-expansion step and an expansion molding step. Note, however, that a copolymer that has been subjected to the pre-expansion step and the expansion molding step does not change in internal and external composition. Thus, the coefficient of static friction depends on a kind and a contained amount of the polysiloxane-containing macro monomer that is present on the surfaces of the expandable polystyrene-based resin particles.

Examples

The following description will discuss Examples and Comparative Examples. Note, however, that the present invention is not limited by the Examples.

<Measurement of yield>

A yield is obtained as below. Specifically, sieves defined by JIS Z8801-1 "Test sieves -- Part 1: Test sieves of metal wire cloth" and having respective mesh sizes of 1400 $\mu$m and 600 $\mu$m are stacked in an ascending order of the mesh sizes. Then, 100 g of expandable polystyrene-based resin particles are introduced into the topmost sieve, and the sieves were vibrated so that the expandable polystyrene-based resin particles are classified. A yield is thus obtained.

Specifically, as represented by the following equation, an amount of expandable polystyrene-based resin particles having passed through the sieve having a mesh size of 1400 $\mu$m and remaining on the sieve having a mesh size of 600 $\mu$m was measured so that a ratio of a weight of these expandable polystyrene-based resin particles to 100 g of the expandable polystyrene-based resin particles introduced was calculated.

$$\text{yield} = \text{amount of resin having passed through sieve}$$
$$\text{having mesh size of 1400 μm and remaining on sieve having}$$
$$\text{mesh size of 600 μm} / 100 \text{ g} \times 100$$

\<GPC measurement\>

A gel component was filtered out from resultant expandable polystyrene-based resin particles after 0.02 g of the resultant expandable polystyrene-based resin particles were dissolved in 20 mL of tetrahydrofuran (hereinafter may be abbreviated as "THF"). Then, gel permeation chromatography (GPC) was used to carry out GPC measurement, under the conditions below, with respect to only a component that was soluble in THF. Then, a GPC measurement chart, a weight average molecular weight (Mw), and a number average molecular weight (Mn) were obtained. Note that obtained values were relative values in terms of polystyrene.

Measuring device: high-speed GPC device HLC-8220 manufactured by TOSOH CORPORATION
Used column: SuperHZM-H $\times$ 2, SuperH-RC $\times$ 2 manufactured by TOSOH CORPORATION
Column temperature: 40°C, Mobile phase: THF (tetrahydrofuran)
Flow rate: 0.35 mL/minute, Pouring amount: 10 pL
Detector: RI

\<Measurement of thickness of polysiloxane layer of expandable polystyrene-based resin particles\>

In order that an unreacted polysiloxane-containing macro monomer was removed, 2 g of expandable polystyrene-based resin particles were weighed out and the expandable polystyrene-based resin particles were separated into matters insoluble in ethanol and matters soluble in ethanol. The matters insoluble in ethanol were further separated into matters insoluble in hexane and matters soluble in hexane, and the matters insoluble in hexane were used to carry out TEM observation. A cross section including surfaces of the expandable polystyrene-based resin particles was subjected to the TEM observation by preparing an ultrathin section with use of an ultramicrotome under a frozen condition and measuring 10 thicknesses of a layer of the cross section, which layer contained polysiloxane as a main component, so as to calculate an average of the thicknesses.

Preparation of frozen ultrathin section (cryoultramicrotome)
Device: FC6 manufactured by Leica
Transmission electron microscope (TEM)
Device: H-7650 manufactured by Hitachi High-Technologies Corporation
Observation condition: acceleration voltage of 100 kV

\<Production of pre-expanded particles\>

Expandable polystyrene-based resin particles having been classified with use of a sieve so as to have a predetermined particle size were pre-expanded, with use of a pressure pre-expanding machine "BHP manufactured by Obiraki Industry Co., Ltd." under a blowing vapor pressure of 0.09 MPa to 0.12 MPa, so that a volume magnification of 45 times was achieved. Thereafter, the expandable polystyrene-based resin particles thus pre-expanded were left under a normal temperature for one day, so that pre-expanded styrene-based particles having a volume magnification of 45 times were obtained.

\<Production of foamed molded product\>

The pre-expanded styrene-based particles were molded in a mold with use of a molding machine "KR-57 manufactured by DAISEN Co., Ltd." under a blowing vapor pressure of 0.07 MPa, so that a plate-like foamed molded product having a thickness of 25 mm, a length of 400 mm, and a width of 350 mm was obtained.

\<Surface property of foamed molded product\>

A state of a surface of the foamed molded product was evaluated by visual observation. A greater numerical value refers to a beautiful surface state in which the surface had fewer or no gaps between particles. Not less than 3 points out of 5 was judged to be passed.
5: No gap between particles was found in the surface.
4: The surface partially had gaps between particles, but the gaps were hardly noticeable.
3: The surface had, here and there, gaps between particles, but the gaps were permissible as a whole.
2: Gaps between particles were noticeable.
1: The surface had many gaps between particles.

<Evaluation of fusibility>

The foamed molded product was split, and a split surface was observed. A percentage of broken particles (not broken interfaces between particles) was found. Then, fusibility of the foamed molded product was determined by the following criteria.

Passed: A percentage of the broken particles was not less than 70%.
Failed: A percentage of the broken particles was less than 70%.

<Measurement of coefficient of static friction>

The foamed molded product was cut, with use of a vertical slicer (manufactured by SAKURA Engineering.), into test pieces each having a length of 60 mm, a width of 60 mm, and a thickness of 4 mm and having a skin layer on one side.

The test pieces were left to stand for 12 hours in a steady temperature and humidity room having a temperature of 23°C and a humidity of 50%. Thereafter, in the steady temperature and humidity room, a test piece and an iron plate were rubbed together back and forth 10 times with use of a surface property tester HEIDON Type: 14FW (manufactured by Shinto Scientific Co., Ltd.) under conditions of a load of 200 g, a back-and-forth rubbing distance of 50 mm, and a sliding rate of 3000 mm/minute. Then, an average of 10 coefficients of static friction was found, the 10 coefficients having been obtained while the test piece and the iron plate were being rubbed together back and forth 10 times.

<Measurement of rubbing sound>

The foamed molded product was cut, with use of a vertical slicer (manufactured by SAKURA Engineering.), into rectangular test pieces each having a length of 300 mm, a width of 60 mm, and a thickness of 25 mm and having skin layers on both sides. The foamed molded product was also cut into triangular test pieces each having a base of 120 mm, a height of 60 mm, and a thickness of 25 mm and having skin layers on both sides. The rectangular test pieces and the triangular test pieces were left to stand for 12 hours in a steady temperature and humidity room having a temperature of 23°C and a humidity of 50%. Thereafter, in the steady temperature and humidity room, a rectangular test piece and a triangular test piece were placed as below. Specifically, on the rectangular test piece, the triangular test piece was placed so that a corner of the triangular test piece came into contact with the rectangular test piece. Then, a load of 2000 g was placed on the triangular test piece. The test pieces thus placed were moved back and forth 10 times at a rate of 6000 mm/minute in a section having a width of 50 mm.

Rubbing sounds produced during the back-and-forth movement of the test pieces were picked up with use of a highly directional microphone, and ranges and sound pressures of the rubbing sounds were measured. A sound pressure was found which had the greatest difference from a sound pressure of an ambient sound in a range of not less than 5000 Hz and not more than 20,000 Hz, at which a human feels annoyed.

<Kind of polysiloxane-containing macro monomer used>

MPS: side chain type methacryloyl-containing polysiloxane (molecular weight: 200,000, viscosity: unclear, number of functional groups: 7.5, functional group equivalent: 9,300 g/ mol)

X-22-164B: both terminal type methacryloyl-containing polysiloxane (molecular weight: 3,500, viscosity: 55 mm$^2$/s, number of functional groups: 2.1, functional group equivalent: 1,630 g/mol) (manufactured by Shin-Etsu Silicone)

KF-96-50: dimethylpolysiloxane (molecular weight: 3,500, viscosity: 50 mm$^2$/s, containing no functional group) (manufactured by Shin-Etsu Silicone)

KF-2012: one terminal type methacryloyl-containing polysiloxane (molecular weight: 4,000, viscosity: 60 mm$^2$/s, number of functional groups: 0.8, functional group equivalent: 4,600 g/mol) (manufactured by Shin-Etsu Silicone)

X-22-2426: one terminal type methacryloyl-containing polysiloxane (molecular weight: 10,000, viscosity: 200 mm$^2$/s, number of functional groups: 0.8, functional group equivalent: 12,000 g/mol) (manufactured by Shin-Etsu Silicone)

<Kind of addition initiator used>

HTP: di-t-butylperoxy hexahydroterephthalate (ten-hour half-life temperature: 83°C) (Kaya Ester HTP-65W, manufactured by KAYAKU AKZO CO., LTD.)
BPO: benzoyl peroxide (ten-hour half-life temperature: 74°C) (NYPER BW, manufactured by NOF CORPORATION)
PBE: t-butylperoxy-2-ethylhexyl monocarbonate (ten-hour half-life temperature: 99°C) (PERBUTYL E, manufactured by NOF CORPORATION)
LPO: dilauroyl peroxide (ten-hour half-life temperature: 62°C) (PERROYL L, manufactured by NOF CORPORATION)

(Example 1)

<Production of polystyrene-based resin seed particles>

In a reactor provided with a stirrer, 100 parts by weight of pure water, 0.4 parts by weight of tricalcium phosphate, 0.01 parts by weight of sodium dodecylbenzene sulfonate, 0.5 parts by weight of sodium chloride, and 0.07 parts by weight of polyethylene wax as a nucleating agent were placed. A resultant mixture was stirred, so that an aqueous suspension was prepared. Thereafter, 0.2 parts by weight of benzoyl peroxide as a polymerization initiator and 0.2 parts by weight of 1,1-bis(t-butylperoxy)cyclohexane as a polymerization initiator (hereinafter may be merely referred to as an "initiator") were dissolved in 100 parts by weight of a styrene-based monomer, and a resultant mixture was added to the reactor. A resultant mixture was heated to 98°C and then polymerization was carried out over 4.5 hours. Thereafter, a resultant polymerized product was cooled and then taken out so as to be dehydrated and dried. Subsequently, a resultant product was sieved, so that polystyrene-based resin seed particles having a particle size of 0.4 mm to 0.5 mm were obtained.

<Production of expandable polystyrene-based resin particles>

Into a 6L autoclave provided with a stirrer, 167 parts by weight of pure water, 1.2 parts by weight of tricalcium phosphate, 0.022 parts by weight of $\alpha$-olefin sodium sulfonate, 0.2 parts by weight of sodium chloride, 0.04 parts by weight of t-butylperoxy-2-ethylhexyl monocarbonate (ten-hour half-life temperature: 99°C) as an initiator, and 20 parts by weight of polystyrene-based resin seed particles having a particle size of 0.4 mm to 0.5 mm were fed. Thereafter, a resultant mixture started to be stirred. Subsequently, the mixture was heated to 90°C, and then polymerization was carried out while 0.22 parts by weight of a 30% benzoyl peroxide solution as an initiator was being fed into the reactor over 5 hours and 78.0 parts by weight of a styrene-based monomer was being fed into the reactor over 5 hours and 30 minutes. During the polymerization, when addition of the styrene-based monomer was ended (after 5 hours had passed since the end of heating to 90°C), 2.0 parts by weight of side chain type methacryloyl-containing polysiloxane (MPS) as a polysiloxane-containing macro monomer and 0.10 parts by weight of di-t-butylperoxy hexahydroterephthalate as an initiator were fed into the reactor over 2 hours, and 90°C was maintained for 30 minutes. Thereafter, the temperature (i.e., 90°C) was raised to 120°C and maintained for 1 hour. Then, the temperature was reduced to 98°C, and 1.0 part by weight of cyclohexane and 6.5 parts by weight of normal rich butane (normal butane: 70%, isobutane: 30%) were fed into the reactor. The temperature was further raised to 110°C, maintained for 1.5 hours, and then reduced to 40°C. A suspension was taken out so as to be dehydrated and dried. Thus, expandable polystyrene-based resin particles were obtained.

First, 100 g of the expandable polystyrene-based resin particles were sieved so that a yield was measured. Then, the other expandable polystyrene-based resin particles were classified, so that expandable polystyrene-based resin particles having a particle size of 0.5 mm to 1.0 mm were obtained. Thereafter, 0.15 parts by weight of hardened castor oil was added to 100 parts by weight of the expandable polystyrene-based resin particles, and a resultant mixture was stirred and mixed in a plastic bag. Furthermore, a resultant product was pre-expanded with use of a pressure pre-expanding machine "BHP-300 (manufactured by Obiraki Industry Co., Ltd)", so that pre-expanded particles having a volume magnification of 45 times were obtained. The pre-expanded particles were cured at a room temperature for one day. Thereafter, a foamed molded product was obtained with use of a molding machine "KR-57 (manufactured by DAISEN Co., Ltd.)" and a mold having a size of 300 mm $\times$ 450 mm $\times$25 (t) mm. Then, a surface property, a coefficient of static friction, and a rubbing sound of the foamed molded product were evaluated. Evaluation results are shown in Table 1.

(Examples 2 to 8, Comparative Examples 1 and 2, and 4 to 9)

As shown in Table 1, Examples 2 to 8 and Comparative Examples 1 and 2, and 4 to 9 each obtained expandable polystyrene-based resin particles, pre-expanded particles, and a foamed molded product as in the case of Example 1 except that Examples 2 to 8 and Comparative Examples 1 and 2, and 4 to 9 each changed, for example, a kind of a polysiloxane-containing macro monomer, an amount of the polysiloxane-containing macro monomer; and a kind of an addition initiator and an amount of the addition initiator. Then, Examples 2 to 8 and Comparative Examples 1 and 2, and 4 to 9 each carried out an evaluation similar to that carried out in Example 1. Note that in each of Comparative Examples 2 and 6 to 8, agglomeration of expandable polystyrene-based resin particles obtained made it impossible to produce a foamed molded product.

(Example 9)

Into a 6L autoclave provided with a stirrer, 167 parts by weight of pure water, 1.2 parts by weight of tricalcium phosphate, 0.022 parts by weight of $\alpha$-olefin sodium sulfonate, 0.2 parts by weight of sodium chloride, 0.04 parts by weight of t-butylperoxy-2-ethylhexyl monocarbonate (ten-hour half-life temperature: 99°C) as an initiator, and 20 parts by weight of polystyrene-based resin seed particles having a particle size of 0.4 mm to 0.5 mm were fed. Thereafter, a resultant mixture started to be stirred. Subsequently, 3.0 parts by weight of Pyro-Guard SR-130 (manufactured by Dai-ichi Kogyo Seiyaku Co., Ltd.) as a flame retarder and 0.6 parts by weight of dicumyl peroxide as an auxiliary flame retarder were dissolved in 10 parts by weight of styrene. Then, a resultant mixture was added to the above suspension. Thereafter, a resultant mixture was maintained at 60°C for 1 hour, and then 0.03 parts by weight of a 30% benzoyl peroxide solution was added to the mixture. Then, the temperature was raised to 90°C and maintained for 1 hour and 30 minutes. Subsequently, polymerization was carried out while 0.2 parts by weight of a 30% benzoyl peroxide solution was being fed into the reactor over 4 hours and 30 minutes and 68 parts by weight of a styrene-based monomer was being fed into the reactor over 4 hours and 50 minutes. During the polymerization, when addition of the styrene-based monomer was ended (after 4 hours and 20 minutes had passed since the end of heating to 90°C), 2.0 parts by weight of methacryloyl-containing polysiloxane (MPS) as a polysiloxane-containing macro monomer and 0.1 parts by weight of di-t-butylperoxy hexahydroterephthalate as an initiator were fed into the reactor over 2 hours, and 90°C was maintained for 30 minutes. Example 9 carried out subsequent operations as in the case of Example 1. Evaluation results are shown in Table. 1.

(Example 10)

Into a 6L autoclave provided with a stirrer, 96 parts by weight of pure water, 0.17 parts by weight of tricalcium phosphate, 0.048 parts by weight of $\alpha$-olefin sodium sulfonate, 3.0 parts by weight of a brominated butadienestyrene copolymer ("EMERALD 3000" manufactured by Chemtura Corporation, bromine content: 64%) as a flame retarder, 0.2 parts by weight of dicumyl peroxide as an auxiliary flame retarder, 0.1 parts by weight of benzoyl peroxide as a polymerization initiator, 0.37 parts by weight of t-butylperoxy-2-ethylhexyl monocarbonate as a polymerization initiator, and 1.4 parts by weight of coconut oil as a plasticizing agent were fed. Thereafter, 98 parts by weight of styrene was fed into the autoclave, and a resultant mixture was heated to 98°C so as to be subjected to polymerization. After 2 hours had passed since the start of polymerization, 0.10 parts by weight of tricalcium phosphate was added to the mixture. Then, a resultant mixture was subjected to polymerization for 5 hours. Subsequently, 2.0 parts by weight of methacryloyl-containing polysiloxane (MPS) as a polysiloxane-containing macro monomer and 0.1 parts by weight of di-t-butylperoxy hexahydroterephthalate as an initiator were added to the mixture over 2 hours, and a resultant mixture was further subjected to polymerization for 30 minutes. Furthermore, 1.0 part by weight of cyclohexane and 6.5 parts by weight of normal rich butane (normal butane: 70%, isobutane: 30%) as an expanding agent were fed into the autoclave. A resultant mixture was heated to 120°C so that impregnation of the expanding agent and polymerization were carried out for 4 hours. Thereafter, a resultant product was cooled to 40°C and then washed, dehydrated, and dried, so that expandable polystyrene-based resin particles were obtained.
First, 100 g of the expandable polystyrene-based resin particles were sieved so that a yield was measured. Then, the remaining expandable polystyrene-based resin particles were further classified, so that expandable polystyrene-based resin particles having a particle size of 0.6 mm to 1.0 mm were obtained. Example 10 carried out subsequent operations as in the case of Example 1. Evaluation results are shown in Table. 1.

(Example 11)

Example 11 carried out operations as in the case of Example 1 except that in <Production of expandable polystyrene-based resin particles>, Example 11 replaced 78.0 parts by weight of the styrene-based monomer with a total of 78.0 parts by weight of a monomer obtained by mixing, in advance, 73.0 parts by weight of a styrene-based monomer and 5.0 parts by weight of butyl acrylate. Evaluation results are shown in Table 1.

(Comparative Example 3)

In <Production of expandable polystyrene-based resin particles>, into a 6L autoclave provided with a stirrer, 167 parts by weight of pure water, 1.2 parts by weight of tricalcium phosphate, 0.022 parts by weight of $\alpha$-olefin sodium

sulfonate, 0.2 parts by weight of sodium chloride, 0.04 parts by weight of t-butylperoxy-2-ethylhexyl monocarbonate (ten-hour half-life temperature: 99°C) as an initiator, 0.1 parts by weight of di-t-butylperoxy hexahydroterephthalate as an initiator, and 20 parts by weight of styrene-based resin seed particles having a particle size of 0.4 mm to 0.5 mm were fed. Thereafter, a resultant mixture started to be stirred. Subsequently, the mixture was heated to 90°C, and then polymerization was carried out while 0.22 parts by weight of a 30% benzoyl peroxide solution as an initiator was being fed into the reactor over 5 hours and 78.0 parts by weight of a styrene-based monomer was being fed into the reactor over 5 hours and 30 minutes. Comparative Example 3 carried out subsequent operations as in the case of Example 1 except that Comparative Example 3 carried out no operation to add di-t-butylperoxy hexahydroterephthalate as an initiator so as to polymerize methacryl-containing polysiloxane. In Comparative Example 3, agglomeration of expandable polystyrene-based resin particles obtained made it impossible to produce a foamed molded product.

[Table 1]

| | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Polymerization condition | Polymerization method | - | Seed | Seed | Seed | Seed | Seed | Seed | Seed | Seed | Seed | Suspension | Seed |
| | Amount of styrene-based monomer | Part by weight | 98.0 | 97.5 | 98.0 | 98.0 | 95.0 | 93.0 | 99.0 | 96.5 | 98.0 | 98.0 | 93.0 |
| | Butyl acrylate | Part by weight | 0 | 0 | 0 | 0 | 0 | 0 | 0 | 0 | 0 | 0 | 5.0 |
| | Kind of flame retarder | - | - | - | - | - | - | - | - | - | SR-130 (*1) | EME3K (*2) | - |
| | Amount of flame retarder | Part by weight | 0 | 0 | 0 | 0 | 0 | 0 | 0 | 0 | 3.0 | 3.0 | 0 |
| | Kind of polysiloxane | - | MPS | MPS | MPS | MPS | X-22-164B | X-22-164B | X-22-2426 | KF-2012 | MPS | MPS | MPS |
| | Polysiloxane weight average molecular weight | $10^4$ g/mol | 20 | 20 | 20 | 20 | 0.35 | 0.35 | 1.00 | 0.40 | 20 | 20 | 20 |
| | Amount of polysiloxane-containing monomer | Part by weight | 2.0 | 2.5 | 2.0 | 2.0 | 5.0 | 7.0 | 1.0 | 3.5 | 2.0 | 2.0 | 2.0 |
| | Polysiloxane addition time | Minute | 120 | 150 | 120 | 120 | 150 | 210 | 60 | 210 | 120 | 120 | 120 |
| | Kind of addition initiator | - | HTP | HTP | PBE | HTP+PBE | HTP | HTP | HTP | HTP | HTP | HTP | HTP |
| | Amount of addition initiator | Part by weight | 0.100 | 0.125 | 0.100 | 0.10+0.10 | 0.250 | 0.350 | 0.050 | 0.175 | 0.100 | 0.100 | 0.100 |
| Physical property of resin | Yield | wt% | 99 | 95 | 99 | 99 | 98 | 95 | 88 | 82 | 99 | 95 | 99 |
| | Thickness of polysiloxane layer | nm | 130 | 150 | Unmeasured | 130 | Unmeasured | Unmeasured | Unmeasured | Unmeasured | Unmeasured | Unmeasured | 130 |
| | Gel component | wt% | 14 | 15 | Unmeasured | 14 | 25 | 32 | 40 | 0 | 13 | 13 | 13 |
| | Weight average molecular weight | $10^4$ g/mol | 25 | 22 | 25 | 25 | 26 | 27 | 28 | 28 | 28 | 25 | 25 |
| Evaluation of molded product | Surface property of molded product | - | 4 | 3 | 4 | 4 | 3 | 3 | 3 | 3 | 4 | 4 | 4 |
| | Rubbing sound | dB | 1 | 1 | 1 | 1 | 3 | 5 | 5 | 3 | 1 | 1 | 1 |
| | Coefficient of static friction | - | 2.0 | 1.5 | 2.0 | 2.0 | 2.3 | 2.0 | 2.5 | 2.4 | 2.0 | 2.0 | 2.0 |
| | Fusibility | % | 95 | 95 | 95 | 95 | 95 | 95 | 95 | 95 | 95 | 95 | 95 |
| | FMVSS | Evaluation | Unevaluated | Unevaluated | Unevaluated | Unevaluated | Unevaluated | Unevaluated | Unevaluated | Unevaluated | Good | Good | Unevaluated |

(*1)    SR-130: Pyro-Guard SR-130 (manufactured by Dai-ichi Kogyo Seiyaku Co., Ltd.)
(*2)    EME3K: EMERALD 3000 (manufactured by Chemtula)

[Table 1] cont.

| | | | Comparative Example 1 | Comparative Example 2 | Comparative Example 3 | Comparative Example 4 | Comparative Example 5 |
|---|---|---|---|---|---|---|---|
| Polymerization condition | Polymerization method | - | Seed | Seed | Seed | Seed | Seed |
| | Amount of styrene-based monomer | Part by weight | 100.0 | 98.0 | 98.0 | 98.0 | 98.0 |
| | Butyl acrylate | Part by weight | 0 | 0 | 0 | 0 | 0 |
| | Kind of flame retarder | - | - | - | - | - | - |
| | Amount of flame retarder | Part by weight | 0 | 0 | 0 | 0 | 0 |
| | Kind of polysiloxane | - | - | MPS | MPS | MPS | MPS |
| | Polysiloxane weight average molecular weight | $10^4$ g/mol | - | 20 | 20 | 20 | 20 |
| | Amount of polysiloxane-containing monomer | Part by weight | 0.0 | 2.0 | 2.0 | 2.0 | 2.0 |
| | Polysiloxane addition time | Minute | - | 120 | 120 | 120 | 120 |
| | Kind of addition initiator | - | - | - | - (HTP was added at early stage of polymerization) | BPO | LPO |
| | Amount of addition initiator | Part by weight | 0.000 | 0.000 | 0.000 | 0.100 | 0.100 |
| Physical property of resin | Yield | wt% | 99 | 0 (agglomerated) | 0 (agglomerated) | 0 (agglomerated) | 0 (agglomerated) |
| | Thickness of polysiloxane layer | nm | 0 | Unmeasured | Unmeasured | Unmeasured | Unmeasured |
| | Gel component | wt% | 0 | | | | |
| | Weight average molecular weight | $10^4$ g/mol | 28 | | | | |
| Evaluation of molded product | Surface property of molded product | - | 5 | | | | |
| | Rubbing sound | dB | 45 | | | | |
| | Coefficient of static friction | - | 4.2 | | | | |
| | Fusibility | % | 95 | | | | |
| | FMVSS | Evaluation | Unevaluated | | | | |

(*1)    SR-130: Pyro-Guard SR-130 (manufactured by Dai-ichi Kogyo Seiyaku Co., Ltd.)

(*2)    EME3K: EMERALD 3000 (manufactured by Chemtula)

EP 3 663 342 B1

[Table 1] cont.

| | | | Comparative Example 6 | Comparative Example 7 | Comparative Example 8 | Comparative Example 9 |
|---|---|---|---|---|---|---|
| Polymerization condition | Polymerization method | - | Seed | Seed | Seed | Seed |
| | Amount of styrene-based monomer | Part by weight | 99.0 | 96.5 | 95.0 | 98.0 |
| | Butyl acrylate | Part by weight | 0 | 0 | 0 | 0 |
| | Kind of flame retarder | - | - | - | - | - |
| | Amount of flame retarder | Part by weight | 0 | 0 | 0 | 0 |
| | Kind of polysiloxane | - | X-22-2426 | KF-2012 | KF-2012 | KF-96-50 |
| | Polysiloxane weight average molecular weight | $10^4$ g/mol | 1.00 | 0.40 | 0.40 | 0.35 |
| | Amount of polysiloxane-containing monomer | Part by weight | 1.0 | 3.5 | 5.0 | 2.0 |
| | Polysiloxane addition time | Minute | 30 | 30 | 300 | 120 |
| | Kind of addition initiator | - | BPO | BPO | BPO | BPO |
| | Amount of addition initiator | Part by weight | 0.050 | 0.175 | 0.250 | 0.100 |
| Physical property of resin | Yield | wt% | 0 (agglomerated) | 60 | 0 (agglomerated) | 62 |
| | Thickness of polysiloxane layer | nm | Unmeasured | Unmeasured | Unmeasured | Unmeasured |
| | Gel component | wt% | | 0 | | 0 |
| | Weight average molecular weight | $10^4$ g/mol | | 29 | | 28 |
| Evaluation of molded product | Surface property of molded product | - | | 4 | | 5 |
| | Rubbing sound | dB | | 15 | | 45 |
| | Coefficient of static friction | - | | 1.5 | | 4.2 |
| | Fusibility | % | | 5 | | 5 |
| | FMVSS | Evaluation | | Unevaluated | | Unevaluated |

(*1)   SR-130: Pyro-Guard SR-130 (manufactured by Dai-ichi Kogyo Seiyaku Co., Ltd.)
(*2)   EME3K: EMERALD 3000 (manufactured by Chemtula)

**Claims**

1. A method for producing expandable polystyrene-based resin particles, the method comprising the steps of:

   a) producing polystyrene-based resin particles from the copolymerization of a styrene-based monomer and a polysiloxane-containing macro monomer, wherein an initiator, which is capable of generating an alkoxy radical and/or a carbonate radical, is added simultaneously with the addition of the polysiloxane-containing macro monomer, when a rate of conversion of the styrene-based monomer into a polymer is not less than 60% and not more than 99%,
   wherein the polysiloxane-containing macro monomer has a functional group which is copolymerizable with the styrene-based monomer; and
   b) producing the expandable polystyrene-based resin particles by impregnating an expanding agent into the polystyrene-based resin particles.

2. The method as set forth in claim 1, wherein not less than 80 wt% of the expandable polystyrene-based resin particles which are produced in the step b) have a particle size of not more than 1400 $\mu$m and not less than 600 $\mu$m, wherein the particle size is determined by classifying all expandable polystyrene-based resin particles produced in step b) using a sieve.

3. The method as set forth in any one of claims 1 or 2, wherein, of 100 parts by weight, which is a total amount of the styrene-based monomer and the polysiloxane-containing macro monomer, the styrene-based monomer accounts for not less than 89.0 parts by weight and not more than 99.2 parts by weight, and the polysiloxane-containing macro monomer accounts for not less than 0.8 parts by weight and not more than 11.0 parts by weight.

4. The method as set forth in any one of claims 1 through 3, wherein the expandable polystyrene-based resin particles have a surface layer part which contains polysiloxane as a main component.

5. The method as set forth in any one of claims 1 through 4, wherein the polystyrene-based resin particles are produced by a seed polymerization method in the step a).

6. A method for producing pre-expanded polystyrene-based particles, the method comprising the step of carrying out a method recited in any one of claims 1 through 5 and pre-expanding the expandable polystyrene-based resin particles.

7. A method for producing a foamed molded product, the method comprising the step of molding the pre-expanded polystyrene-based particles after carrying out a method recited in claim 6.

8. The method as set forth in claim 7, wherein the foamed molded product produced in the step of molding the pre-expanded polystyrene-based particles has a surface whose coefficient of static friction is not more than 2.8, wherein the coefficient of static friction refers to a measured value of a friction that is produced in a case where a load of 200 g is applied to each of (i) a foamed molded product surface and (ii) an iron plate.

9. Expandable polystyrene-based resin particles comprising:

   a polymer comprising units of a styrene-based monomer; and units of a polysiloxane-containing macro monomer, wherein the polysiloxane-containing macro monomer has a functional group which is copolymerizable with the styrene-based monomer, whereby surfaces of foamed molded products, obtained by pre-expanding the expandable polystyrene-based resin particles and molding the pre-expanded polystyrene-based resin particles have a coefficient of static friction of not more than 2.8,
   and a sound pressure of a sound, having a frequency of not less than 5,000 Hz and not more than 20,000 Hz and produced while the foamed molded products are being rubbed together, being not more than 10 dB,
   wherein the coefficient of static friction refers to a measured value of a friction that is produced in a case where a load of 200 g is applied to each of (i) a foamed molded product surface and (ii) an iron plate, both the coefficient of static friction and the sound pressure being measured on the foamed molded products produced under the conditions given in the description.

10. The expandable polystyrene-based resin particles as set forth in claim 9, wherein, of 100 parts by weight, which is a total amount of units derived from the styrene-based monomer and from the polysiloxane-containing macro monomer, the units derived from the styrene-based monomer account for not less than 89.0 parts by weight and not more than 99.2 parts by weight, and the units derived from the polysiloxane-containing macro monomer account for not less than 0.8 parts by weight and not more than 11.0 parts by weight.

11. The expandable polystyrene-based resin particles as set forth in claim 9 or 10, wherein the expandable polystyrene-based resin particles have a surface layer part which contains polysiloxane as a main component.

12. Pre-expanded polystyrene-based particles obtained by pre-expanding the expandable polystyrene-based resin particles recited in any one of claims 9 through 11.

13. A foamed molded product obtained by molding the pre-expanded polystyrene-based particles recited in claim 12.

**Patentansprüche**

1. Ein Verfahren zur Herstellung von expandierbaren Harzteilchen auf Polystyrolbasis, wobei das Verfahren die Schritte umfasst:

a) Herstellen von Harzteilchen auf Polystyrolbasis aus der Copolymerisation eines Monomers auf Styrolbasis und eines Polysiloxan enthaltenden Makromonomers, wobei ein Initiator, welcher ein Alkoxyradikal und/oder ein Carbonatradikal erzeugen kann, gleichzeitig mit der Zugabe des Polysiloxan enthaltenden Makromonomers zugegeben wird,

wenn eine Umwandlungsrate des Monomers auf Styrolbasis in ein Polymer nicht weniger als 60 % und nicht mehr als 99% beträgt,
wobei das Polysiloxan enthaltende Makromonomer eine funktionelle Gruppe aufweist, welche mit dem Monomer auf Styrolbasis copolymerisierbar ist; und

b) Herstellen der expandierbaren Harzteilchen auf Polystyrolbasis durch Imprägnieren eines Treibmittels in die Harzteilchen auf Polystyrolbasis.

2. Das Verfahren wie in Anspruch 1 angegeben, wobei nicht weniger als 80 Gew.-% der expandierbaren Harzteilchen auf Polystyrolbasis, welche in Schritt b) hergestellt werden, eine Teilchengröße von nicht mehr als 1400 μm und nicht weniger als 600 μm aufweisen, wobei die Teilchengröße durch Klassieren aller expandierbaren Harzteilchen auf Polystyrolbasis, welche in Schritt b) hergestellt werden, unter Verwendung eines Siebs bestimmt wird.

3. Das Verfahren wie in einem der Ansprüche 1 oder 2 angegeben, wobei, aus 100 Gewichtsteilen, welche eine Gesamtmenge des Monomers auf Styrolbasis und des Polysiloxan enthaltenden Makromonomers ist, das Monomer auf Styrolbasis nicht weniger als 89,0 Gewichtsteile und nicht mehr als 99,2 Gewichtsteile ausmacht und das Polysiloxan enthaltende Makromonomer nicht weniger als 0,8 Gewichtsteile und nicht mehr als 11,0 Gewichtsteile ausmacht.

4. Das Verfahren wie in einem der Ansprüche 1 bis 3 angegeben, wobei die expandierbaren Harzteilchen auf Polystyrolbasis einen Oberflächenschichtbereich aufweisen, welcher Polysiloxan als eine Hauptkomponente enthält.

5. Das Verfahren wie in einem der Ansprüche 1 bis 4 angegeben, wobei die Harzteilchen auf Polystyrolbasis durch ein Saatpolymerisationsverfahren in dem Schritt a) hergestellt werden.

6. Ein Verfahren zur Herstellung von vorexpandierten Teilchen auf Polystyrolbasis, wobei das Verfahren den Schritt des Ausführens eines Verfahrens wie in einem der Ansprüche 1 bis 5 angeführt und Vorexpandieren der expandierbaren Harzteilchen auf Polystyrolbasis umfasst.

7. Ein Verfahren zur Herstellung eines geschäumten Formgegenstandes, wobei das Verfahren den Schritt des Formens der vorexpandierten Teilchen auf Polystyrolbasis nach dem Ausführen eines in Anspruch 6 angegebenen Verfahrens umfasst.

8. Das Verfahren wie in Anspruch 7 angegeben, wobei der geschäumte Formgegenstand, welcher in dem Schritt des Formens der vorexpandierten Teilchen auf Polystyrolbasis hergestellt wurde, eine Oberfläche aufweist, deren Haftreibungskoeffizient nicht mehr als 2,8 beträgt, wobei sich der Haftreibungskoeffizient auf einen gemessenen Wert einer Reibung bezieht, welche in einem Fall erzeugt wird, in welchem eine Last von 200 g auf sowohl (i) eine geschäumte Formgegenstandsoberfläche und (ii) eine Eisenplatte aufgebracht wird.

9. Expandierbare Harzteilchen auf Polystyrolbasis, umfassend:

ein Polymer, umfassend Einheiten eines Monomers auf Styrolbasis; und
Einheiten eines Polysiloxan enthaltenden Makromonomers, wobei das Polysiloxan enthaltende Makromonomer eine funktionelle Gruppe aufweist, welche mit dem Monomer auf Styrolbasis copolymerisierbar ist, wodurch Oberflächen von geschäumten Formgegenständen, welche durch Vorexpandieren der expandierbaren Harzteilchen auf Polystyrolbasis und Formen der vorexpandierten Harzteilchen auf Polystyrolbasis erhalten werden, einen Haftreibungskoeffizienten von nicht mehr als 2,8 aufweisen,
und ein Schalldruck von Schall mit einer Frequenz von nicht weniger als 5.000 Hz und nicht mehr als 20.000 Hz, der erzeugt wird, während die geschäumten Formgegenstände aneinander gerieben werden, nicht mehr als 10 dB beträgt,
wobei sich der Haftreibungskoeffizient auf einen gemessenen Wert einer Reibung bezieht, welche in einem Fall erzeugt wird, in welchem eine Last von 200 g auf sowohl (i) eine geschäumte Formgegenstandsoberfläche und (ii) eine Eisenplatte aufgebracht wird, wobei sowohl der Haftreibungskoeffizient und der Schalldruck an den hergestellten geschäumten Formgegenständen gemessen werden, unter den in der Beschreibung angegebenen Bedingungen.

10. Die expandierbaren Harzteilchen auf Polystyrolbasis wie in Anspruch 9 angegeben, wobei von 100 Gewichtsteilen, die eine Gesamtmenge von Einheiten darstellen, die von dem Monomer auf Styrolbasis und von dem Polysiloxan enthaltenden Makromonomer abgeleitet sind, die von dem Monomer auf Styrolbasis abgeleiteten Einheiten nicht weniger als 89,0 Gewichtsteile und nicht mehr als 99,2 Gewichtsteile ausmachen und die von dem Polysiloxan enthaltenden Makromonomer abgeleiteten Einheiten nicht weniger als 0,8 Gewichtsteile und nicht mehr als 11,0 Gewichtsteile ausmachen.

11. Die expandierbaren Harzteilchen auf Polystyrolbasis wie in Anspruch 9 oder 10 angegeben, wobei die expandierbaren Harzteilchen auf Polystyrolbasis einen Oberflächenschichtbereich aufweisen, welcher Polysiloxan als eine Hauptkomponente enthält.

12. Vorexpandierte Teilchen auf Polystyrolbasis, erhalten durch das Vorexpandieren der in einem der Ansprüche 9 bis 11 angegebenen expandierbaren Harzteilchen auf Polystyrolbasis.

13. Ein geschäumter Formgegenstand, erhalten durch Formen der in Anspruch 12 angegebenen vorexpandierten Teilchen auf Polystyrolbasis.

## Revendications

1. Méthode pour produire des particules de résine à base de polystyrène expansibles, la méthode comprenant les étapes de :

a) production de particules de résine à base de polystyrène à partir de la copolymérisation d'un monomère à base de styrène et d'un macro-monomère contenant du polysiloxane, dans laquelle un amorceur, qui est capable de générer un radical alcoxy et/ou un radical carbonate, est ajouté simultanément avec l'addition du macro-monomère contenant du polysiloxane,

quand un taux de conversion du monomère à base de styrène en un polymère n'est pas inférieur à 60 % et pas supérieur à 99 %,
dans laquelle le macro-monomère contenant du polysiloxane a un groupe fonctionnel qui est copolymérisable avec le monomère à base de styrène ; et

b) production des particules de résine à base de polystyrène expansibles par imprégnation d'un agent d'expansion dans les particules de résine à base de polystyrène.

2. Méthode selon la revendication 1, dans laquelle au moins 80 % en poids des particules de résine à base de polystyrène expansibles qui sont produites dans l'étape b) ont une taille de particules non supérieure à 1400 $\mu$m et non inférieure à 600 $\mu$m, dans laquelle la taille de particules est déterminée par classification de toutes les particules de résine à base de polystyrène expansibles produites dans l'étape b) au moyen d'un tamis.

3. Méthode selon l'une quelconque des revendications 1 ou 2, dans laquelle, sur 100 parties en poids, qui est une quantité totale du monomère à base de styrène et du macro-monomère contenant un polysiloxane, le monomère à base de styrène représente au moins 89,0 parties en poids et au plus 99,2 parties en poids, et le macro-monomère contenant un polysiloxane représente au moins 0,8 partie en poids et non supérieur à 11,0 parties en poids.

4. Méthode selon l'une quelconque des revendications 1 à 3, dans laquelle les particules de résine à base de polystyrène expansibles ont une partie de couche de surface qui contient du polysiloxane en tant que composant principal.

5. Méthode selon l'une quelconque des revendications 1 à 4, dans laquelle les particules de résine à base de polystyrène sont produites par une méthode de polymérisation par ensemencement dans l'étape a).

6. Méthode pour produire des particules à base de polystyrène pré-expansées, la méthode comprenant l'étape de mise en oeuvre d'une méthode exposée dans l'une quelconque des revendications 1 à 5, et pré-expansion des particules de résine à base de polystyrène expansibles.

7. Méthode pour produire un produit moulé en mousse, la méthode comprenant l'étape de moulage des particules à base de polystyrène pré-expansées après mise en oeuvre d'une méthode exposée dans la revendication 6.

8. Méthode selon la revendication 7, dans laquelle le produit moulé en mousse produit dans l'étape de moulage des particules à base de polystyrène pré-expansées a une surface dont le coefficient de frottement statique n'est pas supérieur à 2,8, dans laquelle le coefficient de frottement statique se réfère à une valeur mesurée d'un frottement qui est produit dans un cas où une charge de 200 g est appliquée à chacune parmi (i) une surface de produit moulé en mousse et (ii) une plaque de fer.

9. Particules de résine à base de polystyrène expansibles comprenant :

   un polymère comprenant des motifs d'un monomère à base de styrène ; et des motifs d'un macro-monomère contenant du polysiloxane, dans lesquelles le macro-monomère contenant du polysiloxane a un groupe fonctionnel qui est copolymérisable avec le monomère à base de styrène, selon lequel les surfaces de produits moulés en mousse, obtenus par pré-expansion des particules de résine à base de polystyrène expansibles et moulage des particules de résine à base de polystyrène pré-expansées, ont un coefficient de frottement statique non supérieur à 2,8, et une pression acoustique d'un son ayant une fréquence non inférieure à 5 000 Hz et non supérieure à 20 000 Hz et produit pendant que les produits moulés en mousse sont frottés ensemble, qui n'est pas supérieure à 10 dB,
   dans lesquelles le coefficient de frottement statique se réfère à une valeur mesurée d'un frottement qui est produit dans un cas où une charge de 200 g est appliquée à chacune parmi (i) une surface de produit moulé en mousse et (ii) une plaque de fer, le coefficient de frottement statique et la pression acoustique étant tous deux mesurés sur les produits moulés en mousse produits dans les conditions indiquées dans la description.

10. Particules de résine à base de polystyrène expansibles selon la revendication 9, dans lesquelles, sur 100 parties en poids, qui est une quantité totale de motifs dérivés du monomère à base de styrène et du macro-monomère contenant du polysiloxane, les motifs dérivés du monomère à base de styrène représentent au moins 89,0 parties en poids et au plus 99,2 parties en poids, et les motifs dérivés du macro-monomère contenant du polysiloxane représentent au moins 0,8 partie en poids et non supérieur à 11,0 parties en poids.

11. Particules de résine à base de polystyrène expansibles selon la revendication 9 ou 10, dans lesquelles les particules de résine à base de polystyrène expansibles ont une partie de couche de surface qui contient du polysiloxane en tant que composant principal.

12. Particules de résine à base de polystyrène pré-expansées obtenues par pré-expansion des particules de résine à base de polystyrène expansibles exposées dans l'une quelconque des revendications 9 à 11.

13. Produit moulé en mousse obtenu par moulage des particules à base de polystyrène pré-expansées exposées dans la revendication 12.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016183255 A
- JP 2014193950 A
- JP 2013006966 A
- JP 2008231175 A
- WO 2006106653 A
- JP 2006291122 A
- JP 2009516019 W